(19) European Patent Office

Europäisches Patentamt

Office européen des brevets

(11) **EP 0 892 546 B1**

(12) **EUROPEAN PATENT SPECIFICATION**

(45) Date of publication and mention
of the grant of the patent:
**26.03.2003 Bulletin 2003/13**

(51) Int Cl.⁷: **H04N 1/053**, H04N 1/191,
H04N 1/047

(21) Application number: **98305615.1**

(22) Date of filing: **15.07.1998**

(54) **Alignment error correction in scanning head**

Korrektur der fehlerhaften Ausrichtung eines Abtastkopfes

Correction d'erreur d'alignement dans une Tête de balayage

(84) Designated Contracting States:
**DE FR GB IT**

(30) Priority: **15.07.1997 KR 9732746**

(43) Date of publication of application:
**20.01.1999 Bulletin 1999/03**

(73) Proprietor: **Samsung Electronics Co., Ltd.**
**Suwon-city, Kyungki-do 441-370 (KR)**

(72) Inventors:
• **Lee, Hyuk-jae**
**Songpa-gu, Seoul (KR)**
• **Gahang, Goo-soo**
**Ilwonbon-dong, Kangnam-gu (KR)**

(74) Representative: **Ellis, Kate, Dr. et al**
**Harrison Goddard Foote,**
**Fountain Precinct,**
**Leopold Street**
**Sheffield S1 2QD (GB)**

(56) References cited:
**EP-A- 0 024 521**          **EP-A- 0 274 383**
**DE-A- 4 416 804**          **US-A- 4 558 372**
**US-A- 4 724 330**          **US-A- 5 249 069**
**US-A- 5 313 311**          **US-A- 5 432 622**

**Description**

Background of the Invention

The present invention relates to a method and an apparatus for correcting an alignment error of a scanning head of a shuttle type scanner.

Conventionally, a scanning head in a shuttle type scanner is transported exactly perpendicularly to a document transporting direction. This means that an alignment error is zero (0). In this case, image distortion does not occur in the scanned image data.

However, since it is impossible to manufacture a perfect product with no alignment error due to limitations in manufacturing processes, scanners which are currently being produced are designed to ignore an alignment error within a permitted limit. Here, the permitted limit in the alignment error varies according to manufacturer and the limit in the alignment error is roughly set so that $\Phi < 4°$, where $\Phi$ is the error angle. Accordingly, a product having an alignment error exceeding this limit is regarded as an inferior product and a process for mechanically rearranging the alignment is performed. A product having an alignment error falling within this limit, even if an alignment error has occurred, is ignored and the product can be used.

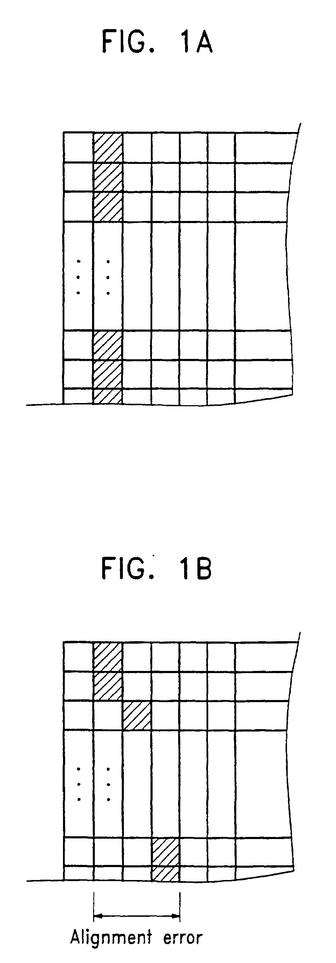

However, in conventional shuttle type scanners, there is no method for correcting the alignment error in products which have an alignment error falling within the permitted limit. As a result, since the product is continuously used despite the alignment error, when a document in a normal state is scanned as in FIG. 1A and the scanned image data is printed as shown in FIG. 1B, image distortion can be seen in the printed image.

EP 0 274 383 describes a device for correcting a read position error in the sub-scanning direction of a line image sensor in which the output from a CCD or the like is stored in line-memory locations and the output from the memory locations is selected in accordance with a predetermined correction.

Summary of the Invention

In a first aspect the invention provides a method of correcting an alignment error in a scanning head comprising:

scanning a correction pattern by reciprocating the scanning head;
calculating an alignment error from image data of the scanned pattern; and
correcting for the calculated alignment error by moving at least one pixel or set of pixels of the image data;

**characterised in that**

(i) a pre-set operation function is used for correcting the calculated alignment error by moving at least one of the first and last pixels of the image data,
(ii) a pre-set correcting function is used for correcting the alignment error is applied to the remaining pixels excluding the first and last pixels; and
(iii) the correction pattern has a size of 1 pixel in the direction in which the scanning head performs its reciprocation and N pixels in the perpendicular direction, where N > 1.

In a second aspect of the invention there is provided an apparatus for correcting an alignment error in a scanning head comprising

means for scanning a correction pattern by the scanning head;
means for calculating an alignment error from image data of the scanned correction pattern;
means for correcting for the calculated alignment error by moving at least one pixel or set of pixels of the image data;

**characterised in that**

(i) the means for calculating the alignment error and the means for correcting for the calculated alignment error include

(a) means for calculating the alignment error from using a pre-set operation function and means for correcting the calculated alignment error by moving at least one of the first and last pixels of the image data, and
(b) means for correcting the alignment error by applying a pre-set correction function to the remaining pixels including the first and last pixel, and

(ii) the means for calculating an alignment error is adapted for use with image data from a correction pattern having a size of 1 pixel in the direction in which the scanning head performs its reciprocation and N pixels in the perpendicular direction, where N > 1.

Preferably, the scanning head is moved to a position facing a correction pattern, when an alignment error correction mode is selected.

Preferably, an alignment error correction mode is set so that alignment error correction is performed during manufacturing of the scanner and/or when starting a scanning operation and/or when scanning every line.

Preferably, the correction pattern has a size of 1 x N pixels, (N being a positive number, usually >2) respectively, in the direction in which the scanning head performs a reciprocating movement and in the direction vertical to the reciprocating movement of the scanning head.

Preferably, the correction pattern in the direction vertical to the direction of the reciprocating movement of the scanning head has at least as many pixels along the vertical axis as pixels in the in the scanning head.

Preferably, the number of pixels in the correcting pattern in a direction parallel to the direction of reciprocal movement of the scanning head is equal to 1.

Preferably, the number of pixels in the correcting pattern is equal to 1 x N where N is the number of pixels in the scanning head in a vertical direction.

Preferably, the correcting pattern has a band shape having 1 x 128 pixels.

Preferably, the operation function is

$$\Phi = \tan^{-1} \frac{D}{V}$$

in which, $\Phi$ is an error angle, V is a total number of pixels in the vertical axis, i.e. substantially perpendicular to the scanning head's direction of travel, and D is the alignment error along the horizontal axis, i.e. in a direction substantially parallel to the head's direction of travel.

Preferably, in the first correction, the last pixel is moved to be positioned on the same vertical axis as the first pixel based on the first pixel. For example, a corrected scanned image position of the last pixel may be calculated by subtracting the alignment error D along the horizontal axis from the actual scanned image position.

Preferably, the correction function is a differential function of

$$\frac{d}{dV} dropD = -Vx \tan \Phi$$

in which, D is the alignment error along the horizontal axis, V is the total number of pixels along the vertical axis and $\Phi$ is the error angle. For example, a corrected scanned image position of the ith pixel may be calculated by subtracting the alignment error $D_i$, calculated using the correction function, from the actual scanned image position of that pixel.

Preferably, the apparatus for correcting an alignment error of a scanning head in which the scanning head performs a reciprocating movement perpendicular to a document transporting direction, comprises a correction plate which is mounted on a path facing the scanning head on which the scanning head performs the reciprocating movement and is equipped with the correction pattern.

Preferably, the apparatus comprises a memory for storing an image data of the pattern scanned by the scanning head. Preferably, the apparatus comprises an operation unit which calculates the alignment error of the pattern image data stored in the memory using the preset operation function. Preferably, the apparatus comprises a central processing unit which controls the reciprocating movement of the scanning head, controls the operation unit to calculate the alignment error of the pattern image data and corrects for the calculated alignment error using the preset correction function.

Preferably, the correction plate is mounted in a position outside a scanning region of the image recorded in a document.

Preferably, the correction plate is mounted at a left or right hand end of the path on which the scanning head performs the reciprocating movement.

Preferably, the correction pattern has an optional colour capable of being scanned by the scanning head, such as black.

Preferably, when an alignment error correction mode is selected at a preset time, the scanning head is moved to a position facing a correcting pattern formed on a correction plate. The correcting pattern is scanned through the scanning head and the alignment error is calculated from the image data of the scanned pattern using a predetermined operation function. After performing a first correction to the calculated alignment error by moving first and last pixels of the image data relative to one another, a second correction to the alignment error is performed by applying a preset correction function to remaining pixels of the image data excluding the first and last pixels.

Preferably the invention provides a method for correcting an alignment error of a scanning head, for example of a shuttle type scanner capable of obtaining a normal printing state when performing a scanning operation, for example using the shuttle type scanner.

Preferably, the invention provides an apparatus for correcting the alignment error of the scanning head of a shuttle type scanner.

Preferably, the invention provides a method and apparatus for correcting an alignment error of a scanning head of a shuttle type scanner capable of compensating an error occurred in a manufacturing process of a product or the alignment error generated by an impact applied in use.

Brief Description of the Drawings

The present invention, will now be described with reference to the following drawings by way of example only in which:

FIG. 1A is a view illustrating an image of a document which is divided into units of pixels;

FIG. 1B is a view illustrating the state that an alignment error has occurred when scanning the image of the document of FIG. 1A;

FIG. 2 is a structural view roughly illustrating a shuttle type scanner applied to the present invention;

Figs. 3A and 3B are detailed views of main parts in FIG. 2;

FIG. 3C is a detailed structural view of a correction plate illustrated in FIG. 2;

FIG. 4 is a block diagram roughly illustrating a shuttle type scanner according to the present invention;

FIG. 5 is a flowchart illustrating a process of performing a method for correcting an alignment error of an scanning head of the shuttle type scanner according to the present invention;

FIG. 6 is a view illustrating an alignment error angle of the scanning head;

FIG. 7A is a view illustrating a pattern data scanned by the scanning head having the alignment error; and

FIG. 7B is a view illustrating the pattern data after the alignment error is corrected.

Detailed Description of the Preferred Embodiments

In the attached drawings, like reference numerals refer to like parts.

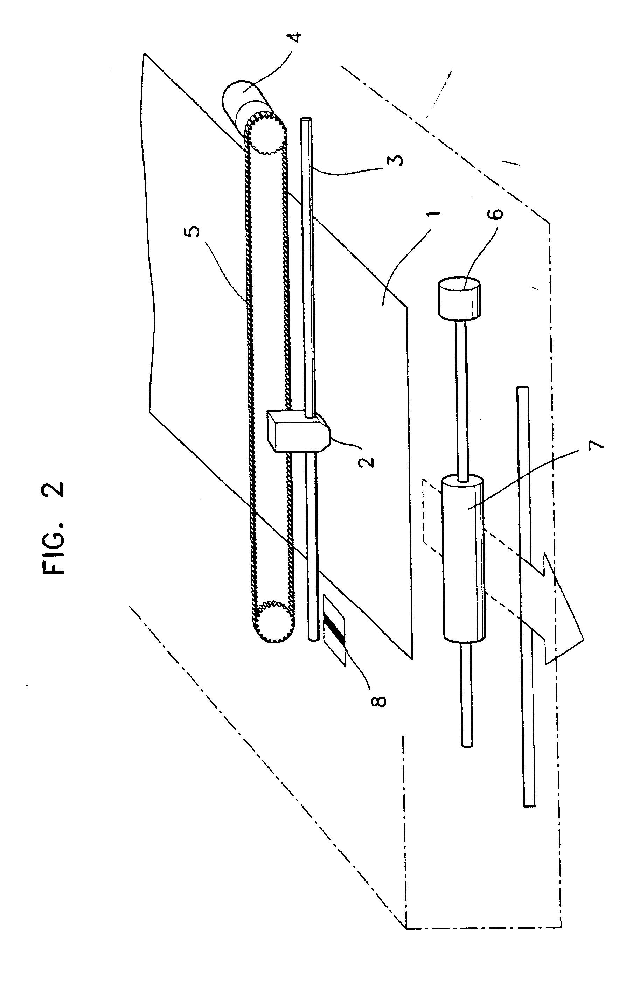

Referring to Figs. 2 to 3B, the shuttle type scanner is comprised of a scanning head 2 including a scanning sensor (not shown) positioned on its lower end surface in order to scan an image recorded on a document 1. The scanner also includes a guide rail 3 for guiding a reciprocating movement of the scanning head 2 to right and left and a carriage return motor 4 for providing a driving force to the scanning head 2 for performing the reciprocating movement to right and left. A transporting belt 5 is mounted on the carriage return motor 4 and the scanning head 2 simultaneously and transmits the driving force of the carriage return motor 4 to the scanning head 2. A feed motor 6 and a transporting roller 7 are provided for transporting the document 1. A correction plate 8 is located in a position outside a scanning region of the document 1. The plate faces the scanning sensor when the scanning head 2 is moved to left. One alternative is that the correction plate 8 could be mounted in a position facing the scanning sensor outside the scanning region of the document 1 when the scanning head 2 is moved to the right.

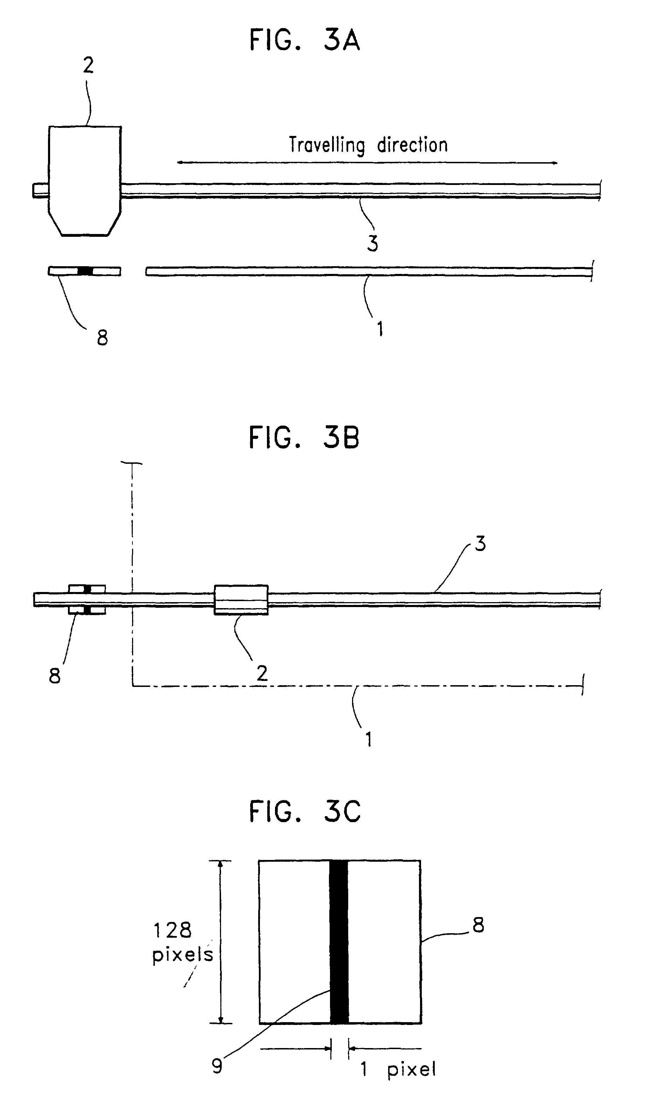

At the centre of the correction plate 8, a correcting pattern 9 having 1 x 128 pixels is located, as shown in FIG. 3C. The correcting pattern 9 is a black colour but may be another optional colour.

Moreover, the size of the correcting pattern 9 is set to correspond to the size of the scanning sensor. Accordingly, the size can vary according to the type of product.

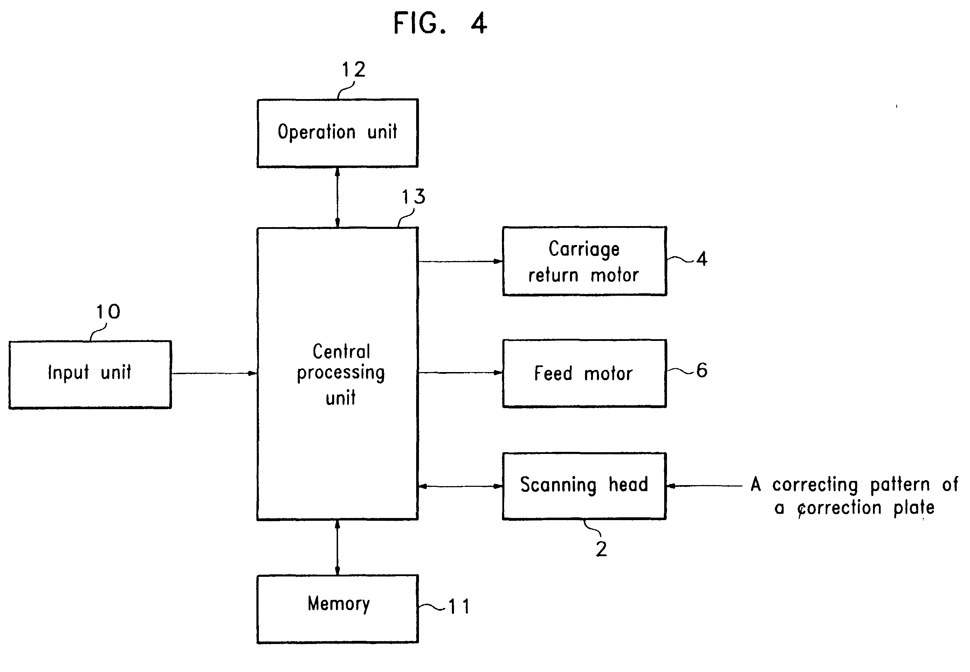

As shown in FIG. 4, the shuttle type scanner including the aforesaid carriage return motor 4, feed motor 6 and the scanning head 2 further includes an input unit 10 in which a plurality of function keys are arranged for selecting an alignment error correcting function and other various functions. The scanner also includes a memory 11 which stores a pattern image of the correcting pattern 9 inputted by the scanning head 2, an image data of the document 1 and various kinds of programs for correcting the alignment error. An operation unit 12 performs the operation for correcting the alignment error of the scanning head 2 using the pattern image data inputted by the scanning head 2; and a central processing unit 13 controls each component part according to programs stored in the memory 11.

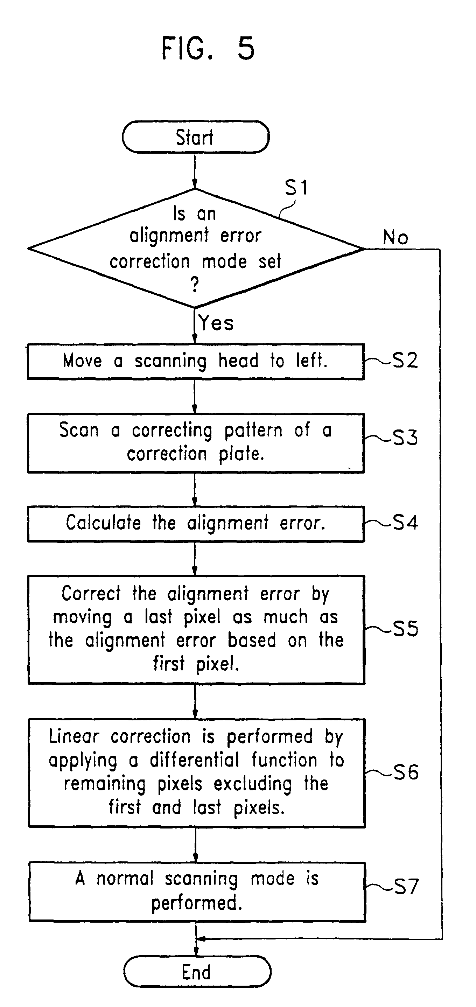

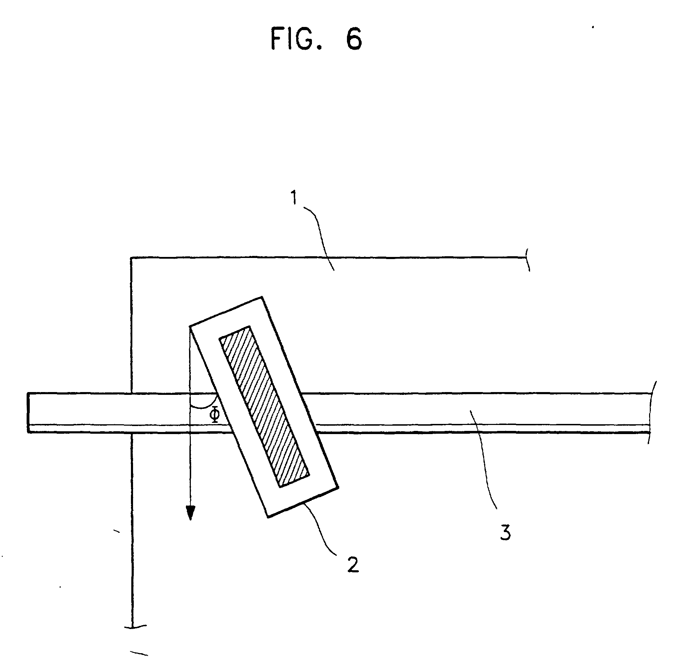

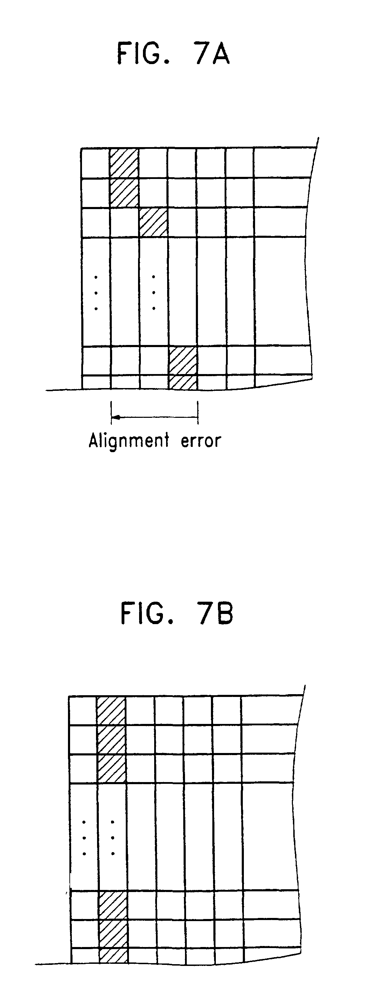

The operation of the present invention having the above structure is explained referring to figs. 5 to 7B.

First, the central processing unit 13 checks whether an alignment error correction mode is selected (step 1). The time for starting the correction in the alignment error correction mode can be set so the correction is performed once when manufacturing the scanner. It is also possible to set the time so that the correction is repeatedly performed whenever starting operation of the scanner, or before each scan etc.

When it is judged that the alignment error correction mode is selected at step 1, the central processing unit 13 moves the scanning head 2 to the left by driving the carriage return motor 4 (step 2). Accordingly, the scanning sensor of the scanning head 2 arrives at a position opposite the correcting pattern 9. At this time, the central processing unit 13 operates the scanning head to scan the correcting pattern 9 (Step 3). As a result, the scanning sensor scans the correcting pattern 9 and the scanned image data is stored in the memory 11.

Afterwards, the central processing unit 13 calculates the alignment error D of the pattern image data stored in the memory 11 in units of pixels by controlling the operation unit 12 (step 4), and corrects the alignment error by moving the last pixel as much as the alignment error based on the first pixel (step 5).

Here, the method for calculating the alignment error of the pattern image data is expressed in the following equation:

$$\tan\Phi = \frac{D}{V}$$

wherein, $\phi$ is an alignment error angle and D is the alignment error in numbers of pixels which has occurred in the horizontal direction (along the axis of travel of the scanning head). In addition, V is the total number of pixels in the vertical axis. Thus, image data for the last pixel position in the scanner is corrected by an amount equal to its displacement along the scanner axis of the corresponding pixel in the correcting pattern scanned by the scanning head.

Thus, the horizontal axis error (BIT) between the first and the last pixels of the scanned data is determined. The pixels consist of a band usually one pixel width wide. The last pixel is moved as much as the detected amount to a corrected position opposite the first pixel on the basis of the first pixel and is thus corrected.

When corrections of the first and last pixels of the image data are completed, a linear correction is performed by applying a differential function to the remaining pixels excluding the first and last pixels (step 6). If the band is defined as a size which can be scanned in one scanning by the scanning head, the last pixel of the band is compulsorily moved to the position of the first pixel and corrected and the rest of the pixels excluding the first and the last pixels are linearly corrected by using differentiating. For example, the differential function applied to perform the linear correction may be as follows:

$$\frac{d}{dv} \; drop(D) = -Vx \; \tan\Phi$$

Thus, the displacement in position of each scanned image pixel along the vertical line of the scanning head, in a direction substantially perpendicular to the scanning axis, due to the alignment error is calculated from this differential function. Thus, the actual position of the pixel is replaced in the scanned image with a corrected position.

Thus, the total alignment error is eliminated by differentiating and linearly correcting the rest of the pixels excluding the first and the last pixels. At that point, any error which is generated during differentiating and linearly correcting the rest of the pixels, excluding the first and last pixels, is negligible. One possible embodiment of the correction applied is as follows. Firstly, measure the horizontal displacement of the last pixel, with respect to the first, in the correction pattern band of pixels, in the scanned image. Second correct the position of the last pixel with respect to the first by correcting for this displacement in the scanned image position of the last pixel eg by subtracting the displacement from the scanned image position of the last pixel. Next, the scanned image positions of the remaining pixels are corrected, by determining the relative linear displacement along the horizontal axis of each pixel and similarly correcting for this displacement. For example, the displacement of the ith pixel, $D_i$ in units of pixels could be equal to $v_i$ x $\tan\Phi$ or $v_i$ x $\frac{D}{V}$, where $v_i$ is the position in units of pixels along the vertical axis of the ith pixel, V is the total number of pixels in the correction pattern band and D is the displacement of the last pixel with respect to the first.

Once the linear correction to the alignment error in the remaining pixels has been performed, the central processing unit 13 performs a normal scanning mode (step 7).

As described above, the correcting pattern 9 of the correction plate 8 applied to the present invention can have any colour suitable to the signal processing of the pattern image data scanned by the scanning head 2 besides the black colour.

Moreover, it is possible to mount the correction plate 8 on the right hand side of the transporting path of the document 1 instead of mounting at the left end.

Since the size of the correcting pattern 9 is set to correspond to the size of the scanning sensor located at the scanning head 2, this size can vary according to the standard of the product.

In addition, it is possible to set the permitted limit of the alignment error up to a limit within the scope of the present invention, and it doesn't matter even if the limit varies according to each manufacturer.

As described above, according to the method and apparatus for correcting the alignment error of the scanning head of the shuttle type scanner according to the present invention, the alignment error of the scanner having the alignment error with the permitted limit is corrected by the software, and the necessity of correcting the alignment error mechanically are removed, thereby increasing productivity.

In addition, since the alignment error within the permitted limit is corrected by the software, a stable image data with reduced distortion can be obtained.

Thus, preferred embodiments of the invention provide a method and an apparatus for correcting an alignment error of a scanning head of a shuttle type scanner capable of compensating for errors occurring in manufacturing of a product or for alignment errors generated by an impact, say, in use. When an alignment error correction mode is selected at a preset time, the scanning head is moved to a position facing a correction pattern formed on a correction plate. The correction pattern is scanned through the scanning head and the alignment error is calculated from the scanned pattern image data using a predetermined operation function. After performing a first correction to the calculated alignment error by moving first and last pixels of the image data, a second correction to the alignment error is performed by applying a preset correction function to remaining pixels excluding the first and last pixels.

## Claims

1. A method of correcting an alignment error in a scanning head comprising:

   scanning a correction pattern by reciprocating the scanning head;
   calculating an alignment error from image data of the scanned pattern; and
   correcting for the calculated alignment error by moving at least one pixel or set of pixels of the image data;

   **characterised in that**

   (i) a pre-set operation function is used for correcting the calculated alignment error by moving at least one of the first and last pixels of the image data,

(ii) a pre-set correcting function is used for correcting the alignment error and is applied to the remaining pixels excluding the first and last pixels; and

(iii) the correction pattern has a size of 1 pixel in the direction in which the scanning head performs its reciprocation and N pixels in the perpendicular direction, where N > 1.

2. A method according to claim 1, in which the scanning head is moved to a position facing the correction pattern, when an alignment error correction mode is selected.

3. A method according to claim 1 or claim 2, in which an alignment error correction mode is set so that alignment error correction is performed during manufacturing of the scanner and/or when starting a scanning operation and/or when scanning every line.

4. Apparatus for correcting an alignment error in a scanning head comprising

means for scanning a correction pattern by the scanning head;
means for calculating an alignment error from image data of the scanned correction pattern;
means for correcting for the calculated alignment error by moving at least one pixel or set of pixels of the image data;

**characterised in that**

(i) the means for calculating the alignment error and the means for correcting for the calculated alignment error include

(a) means for calculating the alignment error by using a pre-set operation function and means for correcting the calculated alignment error by moving at least one of the first and last pixels of the image data, and
(b) means for correcting the alignment error by applying a pre-set correction function to the remaining pixels excluding the first and last pixels, and

(ii) the means for calculating an alignment error is adapted for use with image data from a correction pattern having a size of 1 pixel in the direction in which the scanning head performs its reciprocation and N pixels in the perpendicular direction, where N > 1.

5. An apparatus according to claim 4 in which the scanning head performs a reciprocating movement perpendicular to a document transporting direction, comprising:

a correcting plate which is mounted on a path facing the scanning head on which the scanning head performs the reciprocating movement and is equipped with the correction pattern.

6. An apparatus according to claim 5, in which the correction plate is mounted in a position outside a scanning region of the image recorded in a document.

7. An apparatus according to claim 5 or claim 6, in which the correction plate is mounted at a left or right hand end of the path on which the scanning head performs the reciprocating movement.

8. An apparatus according to any one of claims 4-7, comprising

a memory for storing image data of the pattern scanned by the scanning head;
an operation unit which calculates the alignment error of the pattern image data stored in the memory; and
a central processing unit which controls the reciprocating movement of the scanning head, controls the operation unit to calculate the alignment error of the pattern image data and corrects for the calculated alignment error.

9. A method or an apparatus according to any preceding claim, in which the correction pattern in the direction perpendicular to the direction of the reciprocating movement of the scanning head has at least as many pixels as pixels in the scanning head.

10. A method or an apparatus according to claim 9, in which the number of pixels in the correcting pattern is equal to 1 x N, where N is the number of pixels in the scanning head in a vertical direction.

11. A method or an apparatus according to any preceding claim, in which the last pixel of the image data is moved to be positioned on the same vertical axis as the first pixel.

**Patentansprüche**

1. Verfahren zur Korrektur einer fehlerhaften Ausrichtung eines Abtastkopfes mit:

Abtasten eines Korrekturmusters durch Hin- und Herbewegen des Abtastkopfes; Berechnen einer fehlerhaften Ausrichtung anhand von Bilddaten des abgetasteten Musters; und Korrigieren im Hinblick auf die berechnete fehlerhafte Ausrichtung durch Bewegen mindestens eines Pixels oder einer Serie von Pixeln der Bilddaten;

**dadurch gekennzeichnet, daß**

(i) eine voreingestellte Betriebsfunktion zum Korrigieren der berechneten fehlerhaften Ausrichtung durch Bewegen mindestens eines der folgenden, nämlich des ersten und des letzten Pixels der Bilddaten, verwendet wird,

(ii) eine voreingestellte Korrekturfunktion zum Korrigieren der fehlerhaften Ausrichtung verwendet wird und auf die verbleibenden Pixel mit Ausnahme des ersten und des letzten Pixels angewandt wird; und

(iii) das Korrekturmuster eine Größe von 1 Pixel in der Richtung, in der der Abtastkopf seine Hin- und Herbewegung ausführt, und N Pixel in der dazu senkrechten Richtung aufweist, wobei N > 1 ist.

2. Ein Verfahren nach Anspruch 1, bei dem der Abtastkopf zu einer Position gegenüber dem Korrekturmuster bewegt wird, wenn ein Modus zur Korrektur einer fehlerhaften Ausrichtung ausgewählt wird.

3. Ein Verfahren nach Anspruch 1 oder 2, bei dem ein Modus zur Korrektur einer fehlerhaften Ausrichtung eingestellt wird, so daß die Korrektur der fehlerhaften Ausrichtung während der Herstellung des Scanners und/oder bei Starten eines Abtastvorgangs und/oder bei Abtasten jeder Linie durchgeführt wird.

4. Vorrichtung zum Korrigieren einer fehlerhaften Ausrichtung eines Abtastkopfes mit

Mitteln zum Abtasten eines Korrekturmusters durch den Abtastkopf; Mitteln zum Berechnen einer fehlerhaften Ausrichtung anhand von Bilddaten des abgetasteten Korrekturmusters; Mitteln zum Korrigieren im Hinblick auf die berechnete fehlerhafte Ausrichtung durch Bewegen mindestens eines Pixels oder einer Serie von Pixeln der Bilddaten;

**dadurch gekennzeichnet, daß**

(i) die Mittel zum Berechnen der fehlerhaften Ausrichtung und die Mittel zum Korrigieren der berechneten fehlerhaften Ausrichtung

(a) Mittel zum Berechnen der fehlerhaften Ausrichtung durch Verwenden einer voreingestellten Betriebsfunktion und Mittel zum Korrigieren der berechneten fehlerhaften Ausrichtung durch Bewegen mindestens eines der folgenden, nämlich des ersten und letzten Pixels der Bilddaten, und

(b) Mittel zum Korrigieren der fehlerhaften Ausrichtung durch Anwenden einer voreingestellten Korrekturfunktion auf die verbleibenden Pixel mit Ausnahme des ersten und letzten Pixels, beinhalten und

(ii) die Mittel zum Berechnen einer fehlerhaften Ausrichtung zur Verwendung mit Bilddaten von einem Korrekturmuster angepaßt sind, das eine Größe von 1 Pixel in der Richtung, in der der Abtastkopf seine Hin- und Herbewegung ausführt, und N Pixel in der dazu senkrechten Richtung aufweist, wobei N > 1 ist.

5. Eine Vorrichtung nach Anspruch 4, bei der der Abtastkopf eine Hin- und Herbewegung senkrecht zu einer Dokumententransportrichtung ausführt, mit:

einer Korrekturplatte, die auf einem Weg gegenüber dem Abtastkopf montiert ist, auf dem der Abtastkopf die Hin- und Herbewegung durchführt, und mit dem Korrekturmuster ausgestattet ist.

6. Eine Vorrichtung nach Anspruch 5, bei der die Korrekturplatte in einer Position außerhalb eines Abtastbereiches des Bildes, das in einem Dokument aufgezeichnet wurde, montiert ist.

7. Eine Vorrichtung nach Anspruch 5 oder 6, bei der die Korrekturplatte an einem linken oder rechten Ende des Weges montiert ist, auf dem der Abtastkopf die Hin- und Herbewegung ausführt.

8. Eine Vorrichtung nach einem der Ansprüche 4 - 7, mit

einem Speicher zum Speichern von Bilddaten des Musters, das durch den Abtastkopf abgetastet wird; einer Funktionseinheit, die die fehlerhafte Ausrichtung der Musterbilddaten berechnet, die in dem Speicher gespeichert sind; und einer zentralen Verarbeitungseinheit, die die Hin- und Herbewegung des Abtastkopfes steuert, die Funktionseinheit steuert, um die fehlerhafte Ausrichtung der Musterbilddaten zu berechnen, und im Hinblick auf die berechnete fehlerhafte Ausrichtung korrigiert.

9. Ein Verfahren oder eine Vorrichtung nach einem der vorangehenden Ansprüche, bei dem bzw. bei der das Korrekturmuster in der Richtung senkrecht zu der Richtung der Hin- und Herbewegung des Abtastkopfes mindestens so viele Pixel aufweist, wie Pixel in dem Abtastkopf vorhanden sind.

10. Ein Verfahren oder eine Vorrichtung nach Anspruch 9, bei dem bzw. bei der die Anzahl der Pixel in dem Korrekturmuster gleich 1 x N ist, wobei N die Anzahl von Pixeln in dem Abtastkopf in vertikaler Richtung ist.

11. Ein Verfahren oder eine Vorrichtung nach einem der vorangehenden Ansprüche, bei dem bzw. bei der das letzte Pixel der Bilddaten bewegt wird, um auf derselben vertikalen Achse wie das erste Pixel positioniert zu werden.

**Revendications**

1. Méthode de correction d'une erreur d'alignement dans une tête de balayage comprenant :

le balayage d'un motif de correction en appliquant un mouvement de va-et-vient à la tête de balayage ;
le calcul d'une erreur d'alignement à partir des données-images du motif - balayé ; et
la correction de l'erreur d'alignement calculée en déplaçant au moins un élément d'image ou un ensemble d'éléments d'image des données-images ;

**caractérisée en ce que**

(i) une fonction d'exécution d'opérations pré-établie est utilisée pour corriger l'erreur d'alignement calculée en déplaçant au moins un des premier et dernier éléments d'image des données-images,
(ii) une fonction de correction pré-établie est utilisée pour corriger l'erreur d'alignement et est appliquée aux éléments d'image restants à l'exclusion des premier et dernier éléments d'image ; et
(iii) le motif de correction a une taille de 1 élément d'image dans la direction dans laquelle la tête de balayage effectue son mouvement de va-et-vient et de N éléments d'image dans la direction perpendiculaire, où N > 1.

2. Méthode selon la revendication 1, dans laquelle la tête de balayage est déplacée jusqu'à une position faisant face au motif de correction, lorsqu'un mode de correction d'erreur d'alignement est sélectionné.

3. Méthode selon la revendication 1 ou la revendication 2, dans laquelle un mode de correction d'erreur d'alignement est déterminé de telle manière qu'une correction d'erreur d'alignement soit effectuée durant la fabrication du dispositif de balayage et/ou lors du lancement d'une opération de balayage et/ou lors d'un balayage de chaque ligne.

4. Appareil pour corriger une erreur d'alignement dans une tête de balayage comprenant

un moyen pour balayer un motif de correction à l'aide de la tête de balayage ;
un moyen pour calculer une erreur d'alignement à partir de données-images du motif de correction balayé ;
un moyen pour corriger l'erreur d'alignement calculée en déplaçant au moins un élément d'image ou un ensemble d'éléments d'image des données-images ;

**caractérisé en ce que**

(i) le moyen pour calculer l'erreur d'alignement et le moyen pour corriger l'erreur d'alignement calculée comprennent

(a) un moyen pour calculer l'erreur d'alignement en utilisant une fonction d'exécution d'opérations pré-établie et un moyen pour corriger l'erreur d'alignement calculée en déplaçant au moins un des premier et dernier éléments d'image des données-images, et
(b) un moyen pour corriger l'erreur d'alignement en appliquant une fonction de correction pré-établie aux éléments d'image restants à l'exclusion des premier et dernier éléments d'image, et

(ii) le moyen pour calculer-une erreur d'alignement est fait pour être utilisé avec des données-images d'un motif de correction ayant une taille de 1 élément d'image dans la direction dans laquelle la tête de balayage effectue son mouvement de va-et-vient et de N éléments d'image dans la direction perpendiculaire, où N > 1.

5. Appareil selon la revendication 4, dans lequel la tête de balayage effectue un mouvement de va-et-vient perpendiculaire à une direction de transport de document, comprenant une plaque de correction qui est montée sur un chemin faisant face à la tête de balayage sur lequel la tête de balayage effectue le mouvement de va-et-vient et qui est équipée du motif de correction.

6. Appareil selon la revendication 5, dans lequel la plaque de correction est montée dans une position à l'extérieu d'une zone de balayage de l'image enregistrée dans un document.

7. Appareil selon la revendication 5 ou la revendication 6, dans lequel la plaque de correction est montée à gauche ou à droite du chemin sur lequel la tête de balayage effectue son mouvement de va-et-vient.

8. Appareil selon l'une quelconque des revendications 4 à 7, comprenant

   une mémoire pour mémoriser les données-images du motif balayé par la tête de balayage ;
   une unité d'exécution d'opérations qui calcule l'erreur d'alignement des données-images de motif mémorisées dans la mémoire ; et
   une unité centrale de traitement qui commande le mouvement de va-et-vient de la tête de balayage, qui commande l'unité d'exécution d'opérations afin de calculer l'erreur d'alignement des données-images du motif et qui corrige l'erreur d'alignement calculée.

9. Méthode et appareil selon l'une quelconque des revendications précédentes, dans lesquels le motif de correction dans la direction perpendiculaire à la direction du mouvement de va-et-vient de la tête de balayage a au moins autant d'éléments d'image que dans la tête de balayage.

10. Méthode et appareil selon la revendication 9, dans lesquels le nombre d'éléments d'image du motif de correction est égal à 1 x N, où N est le nombre éléments d'image dans la tête de balayage selon une direction verticale.

11. Méthode et appareil selon l'une quelconque des revendications précédentes, dans lesquels le dernier élément d'image des données-images est déplacé pour être positionné sur le même axe vertical que le premier élément d'image.

## FIG. 1A

## FIG. 1B

Alignment error

FIG. 2

# FIG. 3A

# FIG. 3B

# FIG. 3C

## FIG. 4

# FIG. 5

```
                    ┌─────────────┐
                    │    Start    │
                    └─────────────┘
                           │
                           ▼
                        ╱     ╲            S1
                     ╱            ╲
                  ╱    Is an          ╲
               ╱   alignment error       ╲     No
              ╲   correction mode set    ╱────────┐
                 ╲          ?         ╱           │
                    ╲            ╱               │
                        ╲     ╱                  │
                           │ Yes                 │
                           ▼                     │
        ┌──────────────────────────────┐        │
        │ Move a scanning head to left. │~S2     │
        └──────────────────────────────┘        │
                           │                     │
                           ▼                     │
        ┌──────────────────────────────┐        │
        │ Scan a correcting pattern of a │~S3    │
        │     correction plate.          │       │
        └──────────────────────────────┘        │
                           │                     │
                           ▼                     │
        ┌──────────────────────────────┐        │
        │ Calculate the alignment error. │~S4    │
        └──────────────────────────────┘        │
                           │                     │
                           ▼                     │
        ┌──────────────────────────────┐        │
        │   Correct the alignment error by │     │
        │   moving a last pixel as much as │~S5  │
        │  the alignment error based on the│     │
        │          first pixel.            │     │
        └──────────────────────────────┘        │
                           │                     │
                           ▼                     │
        ┌──────────────────────────────┐        │
        │ Linear correction is performed by │    │
        │ applying a differential function to│~S6 │
        │   remaining pixels excluding the   │    │
        │      first and last pixels.        │    │
        └──────────────────────────────┘        │
                           │                     │
                           ▼                     │
        ┌──────────────────────────────┐        │
        │   A normal scanning mode is     │~S7    │
        │        performed.               │       │
        └──────────────────────────────┘        │
                           │                     │
                           ▼◄────────────────────┘
                    ┌─────────────┐
                    │     End     │
                    └─────────────┘
```

# FIG. 6

# FIG. 7A

Alignment error

# FIG. 7B